# EUROPEAN PATENT APPLICATION

(11) **EP 4 844 890 A1**
(43) Date of publication of application: **25.11.2026**
(21) Application number: 24918636.2
(22) Date of filing: 24.10.2024
(51) Int. Cl.: H01M 10/52, B32B 5/22, C09D 7/62, C09D 123/16, C09D 123/18, C09D 133/04, C09D 183/04, C09J 7/38, C09J 201/00, H01M 10/0562, H01M 10/0585

(54) **COVER FILM-EQUIPPED GAS ADSORPTION SHEET FOR SECONDARY BATTERIES**

(30) Priority: 17.01.2024 JP 2024005608
(71) Applicant: Nitto Denko Corporation, Ibaraki-shi, Osaka 567-8680 (JP)
(72) Inventor: KAWABE, Shigeki, Ibaraki-shi, Osaka 567-8680 (JP)
(74) Representative: Müller-Boré & Partner Patentanwälte PartG mbB
(86) International application number: PCT/JP2024/037913
(87) International publication number: WO 2025/154349

(57) **Abstract**

Provided is a gas adsorption sheet capable of satisfactorily adsorbing a sulfide-based gas. A gas adsorption sheet for a secondary battery with a cover film according to an embodiment of the present invention includes: a gas adsorption sheet for a secondary battery including a heat-resistant base material, and a gas adsorption layer arranged on at least one side of the heat-resistant base material; and a cover film arranged on the gas adsorption layer on a side opposite to the heat-resistant base material. The gas adsorption layer contains: a binder resin; and gas adsorbent particles each of which is formed of an inorganic porous material having pores, and is capable of adsorbing a gas.

## Description

### Technical Field

The present invention relates to a gas adsorption sheet for a secondary battery with a cover film.

### Background Art

In recent years, as a secondary battery having a high energy density, investigations on an all-solid-state battery have been advanced. The all-solid-state battery has advantages, such as: excellent safety because no flammable organic solvent is used in the battery; a low possibility of the occurrence of electrolyte degradation due to rapid charging; and stable operation under a high-temperature environment. In such all-solid-state battery, a sulfide-based solid electrolyte has been used from the viewpoint of an output current.

### Citation List

### Patent Literature

[PTL 1] JP 2020-187855 A

### Summary of Invention

### Technical Problem

However, in an all-solid-state battery formed by using a sulfide-based solid electrolyte, when the sulfide-based solid electrolyte is brought into contact with moisture, a sulfide-based gas such as hydrogen sulfide is produced, and hence there is a safety problem due to gas leakage. The present invention has been made in order to solve such problem, and an object of the present invention is to provide a gas adsorption sheet capable of satisfactorily adsorbing a sulfide-based gas.

### Solution to Problem

[1] According to an embodiment of the present invention, there is provided a gas adsorption sheet for a secondary battery with a cover film, including: a gas adsorption sheet for a secondary battery including a heat-resistant base material, and a gas adsorption layer arranged on at least one side of the heat-resistant base material; and a cover film arranged on the gas adsorption layer on a side opposite to the heat-resistant base material, wherein the gas adsorption layer contains: a binder resin; and gas adsorbent particles each of which is formed of an inorganic porous material having pores, and is capable of adsorbing a gas.
[2] The gas adsorption sheet for a secondary battery with a cover film according to the above-mentioned item [1] may further include an intermediate layer arranged between the heat-resistant base material and the gas adsorption layer.
[3] In the gas adsorption sheet for a secondary battery with a cover film according to the above-mentioned item [1] or [2], the gas adsorbent particles are each a composite of a salt of at least one kind of metal selected from copper, zinc, manganese, cobalt, and nickel, and a silicate, and the gas adsorbent particles may preferably have a pore volume of from 0.3 ml/g to 0.5 ml/g.
[4] In the gas adsorption sheet for a secondary battery with a cover film according to any one of the above-mentioned items [1] to [3], the gas adsorbent particles may each have a surface-treated surface treated with silicone.
[5] In the gas adsorption sheet for a secondary battery with a cover film according to the above-mentioned item [4], the silicone may have an ethoxysilane group or a methoxysilane group.
[6] In the gas adsorption sheet for a secondary battery with a cover film according to the above-mentioned item [4], the silicone may serve as a silane coupling agent having an epoxy group or an amino group.
[7] In the gas adsorption sheet for a secondary battery with a cover film according to the above-mentioned item [4], the silicone may be an alkoxysilane or an organosilazane compound.
[8] In the gas adsorption sheet for a secondary battery with a cover film according to any one of the above-mentioned items [1] to [7], the binder resin may be an acrylic resin.
[9] In the gas adsorption sheet for a secondary battery with a cover film according to the above-mentioned item [8], the binder resin may contain a constituent unit derived from a (meth)acrylic acid alkyl ester, and the (meth)acrylic acid alkyl ester may have a linear or branched alkyl group having 4 to 12 carbon atoms.
[10] In the gas adsorption sheet for a secondary battery with a cover film according to any one of the above-mentioned items [1] to [9], the binder resin may be a butyl rubber, an isoprene rubber, a polyisobutylene rubber, an ethylene propylene rubber, or a silicone-based resin.
[11] In the gas adsorption sheet for a secondary battery with a cover film according to any one of the above-mentioned items [1] to [10], a content of the gas adsorbent particles may be from 10 parts by weight to 90 parts by weight with respect to 100 parts by weight of the gas adsorption sheet for a secondary battery.
[12] In the gas adsorption sheet for a secondary battery with a cover film according to any one of the above-mentioned items [1] to [11], a material for forming the heat-resistant base material may be polyamide imide, polyetherimide, polyphenylene sulfide, polyethylene naphthalate, polyimide, or polyetheretherketone.
[13] In the gas adsorption sheet for a secondary battery with a cover film according to any one of the above-mentioned items [1] to [12], the cover film may include a base material and a pressure-sensitive adhesive layer arranged on at least one side of the base material.
[14] In the gas adsorption sheet for a secondary battery with a cover film according to the above-mentioned item [13], the pressure-sensitive adhesive layer may be formed of a pressure-sensitive adhesive containing a base polymer, and a content of a constituent unit derived from an organic acid monomer in the base polymer may be preferably 0.5 part by weight or less with respect to 100 parts by weight of the base polymer.
[15] In the gas adsorption sheet for a secondary battery with a cover film according to any one of the above-mentioned items [1] to [14], the cover film may be peelable.
[16] According to an embodiment of the present invention, there is provided an all-solid-state secondary battery, including the gas adsorption sheet for a secondary battery with a cover film of any one of the above-mentioned items [1] to [15].
[17] According to an embodiment of the present invention, there is provided an all-solid-state secondary battery using a sulfide-based solid electrolyte, the battery including the gas adsorption sheet for a secondary battery with a cover film of any one of the above-mentioned items [1] to [15].

### Advantageous Effects of Invention

According to the present invention, the gas adsorption sheet capable of satisfactorily adsorbing a sulfide-based gas can be provided.

### Brief Description of Drawings

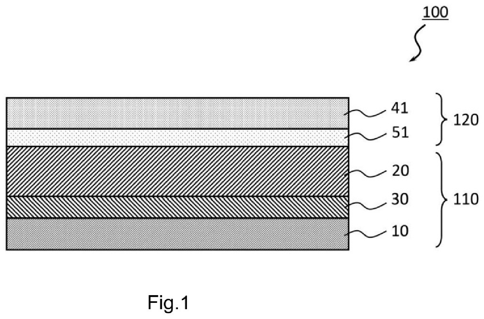

FIG. **1** is a schematic sectional view of a gas adsorption sheet for a secondary battery according to one embodiment of the present invention.

### Description of Embodiments

### A. Entire Configuration of Gas Adsorption Sheet for Secondary Battery with Cover Film

FIG. **1** is a schematic sectional view of a gas adsorption sheet for a secondary battery with a cover film (hereinafter also simply referred to as "gas adsorption sheet with a cover film") according to one embodiment of the present invention. A gas adsorption sheet **100** with a cover film includes: a gas adsorption sheet (hereinafter also simply referred to as "gas adsorption sheet") **110** for a secondary battery including a heat-resistant base material **10,** and a gas adsorption layer **20** arranged on at least one side of the heat-resistant base material **10;** and a cover film **120** arranged on the gas adsorption layer **20** on a side opposite to the heat-resistant base material **10.** The gas adsorption layer contains a binder resin and gas adsorbent particles. The gas adsorbent particles are each formed of an inorganic porous material having pores. Herein, the gas adsorbent particles are particles capable of adsorbing a sulfide-based gas by the action of chemical adsorption to exhibit gas adsorption performance. An example of the sulfide-based gas is hydrogen sulfide. In one embodiment, the above-mentioned gas adsorption sheet **110** further includes an intermediate layer **30** between the heat-resistant base material **10** and the gas adsorption layer **20.** When the intermediate layer is formed, the detachment of the gas adsorption layer can be prevented. In addition, in one embodiment, the cover film **120** includes: a base material **41;** and a pressure-sensitive adhesive layer **51** arranged on at least one side of the base material **41.** The pressure-sensitive adhesive layer **51** may be laminated so as to face the gas adsorption layer **20.** The gas adsorption sheet with a cover film and the gas adsorption sheet may each include any appropriate other layer as long as the effect of the present invention is obtained. For example, the gas adsorption sheet may include a pressure-sensitive adhesive layer (not shown) arranged on one outer surface, or each of both outer surfaces, of the gas adsorption sheet.

According to an embodiment of the present invention, a sheet is formed by dispersing the gas adsorbent particles in the binder resin, and forming the gas adsorption layer containing the gas adsorbent particles and the binder resin. Thus, a gas adsorption sheet that can be applied to various applications with satisfactory handleability can be obtained. In addition, the presence of the heat-resistant base material makes the handleability-improving effect more remarkable. Further, the use of the heat-resistant base material as a base material allows the gas adsorption sheet to be heated (e.g., heated at 200°C for 24 hours) before the use of the gas adsorption sheet. When the gas adsorption sheet is heated before its use, unnecessary substances adhering to the gas adsorbent particles can be removed, and at the time of the use, the performance of the gas adsorbent particles can be sufficiently exhibited.

The above-mentioned gas adsorption sheet may be suitably used as, for example, a gas adsorption material for an all-solid-state battery. The above-mentioned gas adsorption sheet is advantageous in that even a trace amount of the sulfide-based gas can be absorbed with a satisfactory absorption rate and the re-release thereof is small.

In addition, when the above-mentioned gas adsorption sheet with a cover film includes the cover film, the detachment, breakage, and the like of the gas adsorption layer can be prevented, and the performance of the gas adsorbent particles is preferably exhibited. The gas adsorption sheet with a cover film may be used as the gas adsorption sheet by peeling the cover film.

### B. Gas Adsorption Sheet

The H₂S adsorption amount of the above-mentioned gas adsorption sheet is preferably 10 mg/g or more, more preferably 30 mg/g or more, still more preferably 50 mg/g or more, particularly preferably 80 mg/g or more, most preferably 100 mg/g or more. In addition, the upper limit of the H₂S adsorption amount of the above-mentioned gas adsorption sheet is, for example, 500 mg/g, preferably 800 mg/g, more preferably 1,000 mg/g. A measurement method for the H₂S adsorption amount is described later.

The above-mentioned gas adsorption sheet may have a pressure-sensitive adhesive property on one surface, or each of both surfaces, thereof, or may be a gas adsorption sheet having no pressure-sensitive adhesive property. Examples of the form of the gas adsorption sheet having a pressure-sensitive adhesive property include a form in which the gas adsorption layer has a pressure-sensitive adhesive property, and a form in which a pressure-sensitive adhesive layer is arranged on the outermost side of the gas adsorption sheet.

When the above-mentioned gas adsorption sheet has a pressure-sensitive adhesive property, the pressure-sensitive adhesive strength of the gas adsorption sheet with respect to a stainless-steel plate at 23°C is preferably from 0.1 N/19 mm to 30 N/19 mm, more preferably from 0.5 N/19 mm to 20 N/19 mm. When the pressure-sensitive adhesive strength falls within such ranges, the gas adsorption sheet can be made suitable for a battery application. Herein, the pressure-sensitive adhesive strength is a pressure-sensitive adhesive strength measured by a method in conformity with JIS Z 0237:2000, and is measured by bonding a pressure-sensitive adhesive tape to an adherend (SUS 304BA) by one back-and-forth pass with a 2 kg roller, leaving the resultant to stand under 25°C for 30 minutes, and then peeling off the pressure-sensitive adhesive tape under the conditions of a peel angle of 180° and a peel rate (tensile rate) of 300 mm/min.

The thickness of the above-mentioned gas adsorption sheet is preferably from 10 µm to 1,000 µm, more preferably from 20 µm to 500 µm, still more preferably from 20 µm to 150 µm, still more preferably from 20 µm to 120 µm, particularly preferably from 20 µm to 110 µm. When the thickness falls within such ranges, a gas adsorption sheet excellent in gas adsorption performance and handleability can be obtained.

### B-1. Gas Adsorption Layer

As described above, the gas adsorption layer contains the binder resin and the gas adsorbent particles present in a dispersed state in the binder resin. In the present invention, such form is adopted, and thus the gas adsorption layer can be formed by application through use of an application liquid containing the binder resin and the gas adsorbent particles. As a result, a gas adsorption layer excellent in dispersibility of the gas adsorbent particles can be formed, and hence a gas adsorption sheet excellent in gas adsorption performance can be obtained.

The thickness of the above-mentioned gas adsorption layer is preferably from 5 µm to 150 µm, more preferably from 5 µm to 100 µm, still more preferably from 10 µm to 80 µm. When the thickness falls within such ranges, the gas adsorption layer can be made capable of sufficiently exhibiting the performance of the gas adsorbent particles. In addition, a gas adsorption sheet excellent in handleability can be obtained.

### (Gas Adsorbent Particles)

As described above, the gas adsorbent particles are capable of adsorbing a sulfide-based gas by chemical adsorption. The term "chemical adsorption" refers to the adsorption of a gas to be adsorbed by a chemical reaction. The gas adsorbent particles are each formed of an inorganic porous material having pores. In one embodiment, the gas adsorbent particles may each be a composite of a salt of at least one kind of metal selected from copper, zinc, manganese, cobalt, and nickel, and a silicate.

Copper, zinc, or manganese is preferably used, and copper or zinc is more preferably used as a metal (metal ion) for forming the above-mentioned metal salt. When such metal is used, a gas adsorption sheet particularly excellent in sulfide-based gas adsorption property can be obtained. In addition, such a gas adsorption sheet that whether or not the sheet has been used is easy to determine by coloring after gas adsorption can be provided. In addition, examples of an acid for forming the above-mentioned metal salt include sulfuric acid, hydrochloric acid, and nitric acid.

The above-mentioned silicate is preferably an alkali metal silicate, more preferably sodium silicate or potassium silicate, particularly preferably sodium silicate.

The molar ratio (metal salt/silicate) of the metal salt to the silicate is preferably 0.29 or more and less than 0.5, more preferably from 0.3 to 0.45, still more preferably from 0.3 to 0.4.

In one embodiment, the above-mentioned gas adsorbent particles each have a surface-treated surface. Surface treatment may be treatment for adjusting affinity between the gas adsorbent particles and the binder resin. When the gas adsorbent particles each having a surface-treated surface are used, a gas adsorption layer that has excellent mechanical strength and is hardly detached can be formed. The above-mentioned gas adsorption sheet with a cover film provided by laminating a cover film is particularly preferred because damage to the gas adsorption layer can be prevented when the cover film is peeled off at the time of the use of the gas adsorption sheet. In addition, when the gas adsorbent particles each having a surface-treated surface are used, a gas adsorption sheet having excellent workability at the time of a cutting process can be obtained. For example, when the gas adsorption sheet is punched out with a cutting die such as a Thomson blade, damage to the gas adsorption layer can be prevented. The surface-treated surface may be the entire surface, or part of the surface, of each of the gas adsorbent particles. Examples of the surface treatment include treatment with a silane coupling agent, treatment with an isocyanate compound, treatment with a thiol compound, treatment with an acid compound, treatment with an alcohol compound, and treatment with an epoxy compound. In one embodiment, the above-mentioned surface treatment may be coupling treatment. When gas adsorbent particles subjected to coupling treatment are used, a preventing effect on the detachment of the gas adsorption layer and an improving effect on the workability thereof become significant.

In one embodiment, gas adsorbent particles each having a surface-treated surface treated with silicone are used. In one embodiment, the silicone has an ethoxysilane group or a methoxysilane group. When such silicone is used, a gas adsorption layer that has excellent mechanical strength and is hardly detached can be formed. The above-mentioned silicone may serve as a silane coupling agent. The silane coupling agent preferably has an epoxy group and/or an amino group. When such silane coupling agent is used, a gas adsorption layer that has excellent mechanical strength and is hardly detached can be formed. The above-mentioned gas adsorbent particles, that is, the gas adsorbent particles subjected to surface treatment with silicone (a silane coupling agent) may be obtained by bringing the silane coupling agent into contact with the surface of each of the above-mentioned gas adsorbent particles. In this way, an organic group (e.g., a hydroxy group) present on the surface of each of the gas adsorbent particles and a silanol group formed through the hydrolysis of the silane coupling agent may be caused to react with each other, or an oligomer formed through the condensation of silanol groups may be bonded to the gas adsorbent particles.

Examples of the above-mentioned silane coupling agent include vinyl trimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, a hydrochloric acid salt of N-(vinylbenzyl)-2-aminopropyltrimethoxysilane, tris-(trimethoxysilylpropyl)isocyanurate, a 3-ureidopropyltrialkoxysilane, 3-mercaptopropylmethyldimethoxysilane, 3-isocyanatopropyltriethoxysilane, and dithioltriazinepropyltriethoxysilane.

In one embodiment, for example, an alkoxysilane such as phenyltrimethoxysilane or an organosilazane compound such as hexamethyldisilazane is used as the above-mentioned silicone.

The average particle diameter (median diameter D50) of the above-mentioned gas adsorbent particles is preferably 10 µm or less. When the average particle diameter falls within such range, a gas adsorption layer having a large gas adsorption amount can be formed. The average particle diameter (median diameter D50) may be measured with a laser diffraction/scattering particle diameter distribution-measuring apparatus.

The above-mentioned gas adsorbent particles have a pore volume of preferably from 0.3 ml/g to 0.5 ml/g, more preferably from 0.35 ml/g to 0.45 ml/g. When the pore volume falls within such ranges, a gas adsorption sheet particularly excellent in sulfide-based gas adsorption property can be obtained. The pore volume may be measured by a BET method using a nitrogen gas.

The specific surface area of the above-mentioned gas adsorbent particles is preferably from 100 m²/g to 3,000 m²/g. When the specific surface area falls within such range, gas adsorbent particles excellent in gas adsorption performance and mechanical strength can be obtained. Such gas adsorbent particles having a large specific surface area are liable to aggregate, but according to the invention of the present application, the gas adsorption layer can be formed with satisfactory dispersibility of the gas adsorbent particles.

The H₂S adsorption amount of the gas adsorbent particles is preferably 10 mg/g or more, more preferably 30 mg/g or more, still more preferably 50 mg/g or more, particularly preferably 80 mg/g or more, most preferably 100 mg/g or more. In addition, the upper limit of the H₂S adsorption amount of the above-mentioned gas adsorption sheet is, for example, 500 mg/g, preferably 800 mg/g, more preferably 1,000 mg/g.

The content of the above-mentioned gas adsorbent particles is preferably from 10 parts by weight to 90 parts by weight, more preferably from 30 parts by weight to 80 parts by weight, still more preferably from 40 parts by weight to 70 parts by weight with respect to 100 parts by weight of the gas adsorption sheet. When the content falls within such ranges, a gas adsorption sheet excellent in gas adsorption performance and excellent in handleability can be obtained.

The content of the above-mentioned gas adsorbent particles is preferably from 10 parts by weight to 2,000 parts by weight, more preferably from 50 parts by weight to 1,500 parts by weight, still more preferably from 100 parts by weight to 1,000 parts by weight, particularly preferably from 280 parts by weight to 1,000 parts by weight with respect to 100 parts by weight of the binder resin for forming the gas adsorption layer. When the content falls within such ranges, a gas adsorption layer from which the gas adsorbent particles are hardly detached can be obtained. In addition, a gas adsorption sheet excellent in gas adsorption performance and handleability can be obtained.

### (Binder Resin)

Any appropriate resin is used as the above-mentioned binder resin as long as the effect of the present invention is obtained. Examples of the binder resin include: an acrylic resin; a rubber-based resin, such as a butyl rubber, an isoprene rubber, a polyisobutylene rubber, or an ethylene propylene rubber; a silicone-based resin; a urethane-based resin; an epoxy-based resin; an alkyd-based resin; a polyester-based resin; a melamine-based resin; a polyamide-based resin; a polyimide-based resin; an ethylene-vinyl acetate copolymer resin; and a polyvinyl alcohol-based resin. In one embodiment, an acrylic resin, a butyl rubber, or a silicone-based resin is preferably used. When any such resin is used, a gas adsorption layer excellent in dispersibility of the gas adsorbent particles can be formed.

The above-mentioned binder resin preferably has a gas permeation property. When the binder resin having a gas permeation property is used, a gas adsorption sheet suitable for a battery application can be obtained. Examples of the resin excellent in gas permeation property include: an acrylic resin; a rubber-based resin, such as a butyl rubber, an isoprene rubber, a polyisobutylene rubber, or an ethylene propylene rubber; a silicone-based resin; a urethane-based resin; an epoxy-based resin; an alkyd-based resin; a polyester-based resin; a melamine-based resin; a polyamide-based resin; and a polyimide-based resin.

In one embodiment, an acrylic resin is used as the above-mentioned binder resin. When the acrylic resin is used, a gas adsorption layer from which the gas adsorbent particles are hardly detached can be formed. In addition, a gas adsorption layer that allows the gas adsorption performance of the gas adsorbent particles to be sufficiently exhibited can be formed.

The acrylic resin is, for example, an acrylic resin containing one or two or more kinds of constituent units each derived from a (meth)acrylic acid alkyl ester. The content of the above-mentioned constituent unit derived from the (meth)acrylic acid alkyl ester is preferably from 50 parts by weight to 97 parts by weight, more preferably from 70 parts by weight to 94 parts by weight with respect to 100 parts by weight of the acrylic resin.

The above-mentioned (meth)acrylic acid alkyl ester preferably has a linear or branched alkyl group having 1 to 24 (more preferably 3 to 20, still more preferably 6 to 18) carbon atoms.

In one embodiment, the above-mentioned (meth)acrylic acid alkyl ester has preferably a linear or branched alkyl group having 4 to 12 carbon atoms, more preferably a linear or branched alkyl group having 6 to 12 carbon atoms. When the gas adsorption layer is formed by using an acrylic resin having such (meth)acrylic acid alkyl ester as a main constituent unit, a gas adsorption sheet whose discoloration and swelling in an electrolytic solution are suppressed can be obtained.

Examples of the above-mentioned (meth)acrylic acid alkyl ester include methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, and eicosyl (meth)acrylate.

In one embodiment, a (meth)acrylic acid alkyl ester having a branched alkyl group is used as the above-mentioned (meth)acrylic acid alkyl ester. When the (meth)acrylic acid alkyl ester having a branched alkyl group is used, a gas adsorption layer that allows the gas adsorption performance of the gas adsorbent particles to be sufficiently exhibited can be formed. The (meth)acrylic acid alkyl ester having a linear alkyl group and the (meth)acrylic acid alkyl ester having a branched alkyl group may be used in combination. In addition, the (meth)acrylic acid alkyl ester having a branched alkyl group may be used alone as the (meth)acrylic acid alkyl ester.

In one embodiment, the content of a constituent unit derived from the (meth) acrylic acid alkyl ester having a branched alkyl group in the above-mentioned acrylic resin is preferably from 20 parts by weight to 100 parts by weight, more preferably from 30 parts by weight to 100 parts by weight, still more preferably from 50 parts by weight to 100 parts by weight, particularly preferably from 70 parts by weight to 100 parts by weight with respect to 100 parts by weight of the constituent unit derived from the (meth)acrylic acid alkyl ester (i.e., a total amount of 100 parts by weight of the (meth)acrylic acid alkyl ester having a linear alkyl group (including methyl (meth)acrylate and ethyl (meth)acrylate) and the (meth)acrylic acid alkyl ester having a branched alkyl group).

Examples of the (meth)acrylic acid alkyl ester having a branched alkyl group include isobutyl (meth)acrylate, s-butyl (meth)acrylate, t-butyl (meth)acrylate, 2-ethylhexyl (meth)acrylate, isooctyl (meth)acrylate, isononyl (meth)acrylate, isodecyl (meth)acrylate, stearyl (meth)acrylate, 2-ethylbutyl (meth)acrylate, and 2-methylbutyl (meth)acrylate. Of those, 2-ethylhexyl (meth)acrylate is preferred.

The above-mentioned acrylic resin may contain a constituent unit derived from another monomer copolymerizable with the above-mentioned (meth)acrylic acid alkyl ester as required for the purpose of modifying cohesive strength, heat resistance, cross-linkability, or the like. Examples of such other monomer include: carboxyl group-containing monomers, such as (meth)acrylic acid, carboxyethyl acrylate, carboxypentyl acrylate, itaconic acid, maleic acid, fumaric acid, and crotonic acid; acid anhydride group-containing monomers, such as maleic anhydride and itaconic anhydride; phosphoric acid group-containing monomers such as 2-hydroxyethylacryloyl phosphate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; (N-substituted) amide-based monomers, such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic acid ester-based monomers each having a heterocycle, a halogen atom, or a silicon atom, such as tetrahydrofurfuryl (meth)acrylate, fluorinated (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa (meth) acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof.

The content of the above-mentioned constituent unit derived from the other monomer is preferably 20 parts by weight or less, more preferably 15 parts by weight or less, still more preferably from 1 part by weight to 10 parts by weight with respect to 100 parts by weight of the acrylic resin.

In one embodiment, the above-mentioned acrylic resin is free of a constituent unit derived from a carboxyl group-containing monomer such as (meth) acrylic acid. When such acrylic resin is used, even though the above-mentioned gas adsorbent particles are incorporated, a gas adsorption layer can be preferably formed while their gelation is prevented.

The weight-average molecular weight of the above-mentioned acrylic resin is preferably from 300,000 to 2,000,000, more preferably from 500,000 to 1,500,000. The weight-average molecular weight may be measured by GPC (solvent: THF).

### B-2. Heat-resistant Base Material

Herein, the term "heat-resistant base material" means a base material capable of withstanding heating under an atmosphere having a temperature of 150°C and a pressure of from -100 kPa to 0 kPa for 24 hours (preferably under an atmosphere having a temperature of 200°C and a pressure of from -100 kPa to 0 kPa for 24 hours), specifically a base material having a dimensional change of 5% or less even when heated under an atmosphere having a temperature of 150°C and a pressure of -100 kPa for 24 hours (preferably under an atmosphere having a temperature of 200°C and a pressure of -100 kPa for 24 hours). In addition, when the heat-resistant base material is formed of a resin, the heat-resistant base material means a base material formed of a resin having a glass transition temperature of 80°C or more (preferably 100°C or more, more preferably 150°C or more) . The term "glass transition temperature" means the temperature at which the resin shows the peak of a loss tangent (tanδ) found under the conditions of a temperature increase rate of 5°C/min, a sample width of 5 mm, a chuck-to-chuck distance of 20 mm, and a frequency of 10 Hz in a DMA method (tensile method).

Any appropriate material may be adopted as a material for forming the above-mentioned heat-resistant base material as long as the effect of the present invention is obtained. The above-mentioned heat-resistant base material is preferably formed of a resin. Examples of the material for forming the heat-resistant base material include polyamide imide (PAI), polyetherimide (PEI), polyphenylene sulfide (PPS), polyethylene naphthalate (PEN), polyimide (PI), and polyetheretherketone (PEEK). Those resins are each excellent in heat resistance.

The thickness of the above-mentioned heat-resistant base material is preferably from 5 µm to 500 µm, more preferably from 10 µm to 300 µm, still more preferably from 15 µm to 100 µm. When the thickness falls within such ranges, a gas adsorption sheet particularly excellent in handleability can be obtained.

### B-3. Intermediate Layer

The above-mentioned intermediate layer contains any appropriate resin. Examples of the resin for forming the intermediate layer include an acrylic resin, a rubber-based resin, and a silicone-based resin. Of those, an acrylic resin may be preferably used. In addition, an active energy ray-curable acrylic resin may be used as a pressure-sensitive adhesive. Examples of the resin for forming the intermediate layer include the above-mentioned binder resins. In one embodiment, the same resin as the binder resin for forming the above-mentioned gas adsorption layer is used as the resin for forming the intermediate layer. The intermediate layer is free of gas adsorbent particles.

When the intermediate layer is formed, a gas adsorption sheet from which its gas adsorption layer is hardly detached can be obtained.

The thickness of the above-mentioned intermediate layer is preferably from 1 µm to 50 µm, more preferably from 2 µm to 30 µm, still more preferably from 2 µm to 20 µm.

The above-mentioned intermediate layer may contain any appropriate additive as required. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive agent, a UV absorber, a light stabilizer, a release modifier, a softening agent, a surfactant, a flame retardant, an antioxidant, and a solvent.

### C. Production Method for Gas Adsorption Sheet

The above-mentioned gas adsorption sheet may be produced by any appropriate method. In one embodiment, the above-mentioned gas adsorption sheet is produced by applying a composition for gas adsorption layer formation containing the above-mentioned binder resin and the gas adsorbent particles onto the heat-resistant base material, and by drying the composition. When the gas adsorption layer is formed by application, a gas adsorption sheet excellent in dispersibility of the gas adsorbent particles and excellent in gas adsorption performance can be obtained.

The above-mentioned composition for gas adsorption layer formation may further contain any appropriate additive in addition to the binder resin and the gas adsorbent particles. Examples of the additive include a cross-linking agent, a tackifier, a plasticizer (e.g., a trimellitic acid ester-based plasticizer or a pyromellitic acid ester-based plasticizer), a pigment, a dye, a filler, an age resistor, a conductive agent, a UV absorber, a light stabilizer, a release modifier, a softening agent, a surfactant, a flame retardant, and an antioxidant. Examples of the cross-linking agent include an isocyanate-based cross-linking agent, an epoxy-based cross-linking agent, a melamine-based cross-linking agent, and a peroxide-based cross-linking agent, and also include a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred. In addition, the composition for gas adsorption layer formation may contain a solvent, such as toluene or ethyl acetate.

Examples of an application method for the above-mentioned composition for gas adsorption layer formation include: coating methods, such as air doctor coating, blade coating, knife coating, reverse coating, transfer roll coating, gravure roll coating, kiss coating, cast coating, spray coating, slot orifice coating, calender coating, electrodeposition coating, dip coating, and die coating; and printing methods, such as a relief printing method, for example, flexo printing, an intaglio printing method, for example, a direct gravure printing method or an offset gravure printing method, a planographic printing method, for example, an offset printing method, and a stencil printing method, for example, a screen printing method.

### D. Cover Film

In one embodiment, the cover film includes: a base material; and a pressure-sensitive adhesive layer arranged on at least one side of the base material.

In one embodiment, the above-mentioned cover film is arranged so as to be peelable. In one embodiment, the cover film can be peeled off from the gas adsorption sheet after heat drying at 110°C for 3 hours. The peelability of such cover film may be controlled by, for example, adjusting the pressure-sensitive adhesive strength of the cover film with the composition and the like of the pressure-sensitive adhesive layer.

The pressure-sensitive adhesive strength of the above-mentioned cover film with respect to a stainless-steel plate at 25°C is preferably from 0.05 N/20 mm to 5 N/20 mm, more preferably from 0.1 N/20 mm to 3 N/20 mm, more preferably from 0.15 N/20 mm to 2 N/20 mm, still more preferably from 0.15 N/20 mm to 1 N/20 mm.

In one embodiment, the above-mentioned cover film is laminated so as to be peelable from the gas adsorption sheet. When the gas adsorption sheet with a cover film is dried under a reduced pressure of -100 kPa at 130°C for 3 hours and then the cover film is peeled off from the gas adsorption sheet, the peel strength of the cover film is preferably from 0.01 N/50 mm to 5 N/50 mm, more preferably from 0.02 N/50 mm to 3 N/50 mm, still more preferably from 0.05 N/50 mm to 2.5 N/50 mm. When the peel strength falls within such ranges, a cover film that can prevent damage to the gas adsorption sheet and is peelable can be obtained. The above-mentioned peel strength may be measured by a method in conformity with JIS Z 0237:2000. That is, the above-mentioned peel strength is measured by peeling off the cover film of the gas adsorption sheet with a cover film from the gas adsorption sheet under the conditions of a measurement temperature of 25°C, a peel angle of 180°, and a peel rate (tensile rate) of 300 mm/min.

### D-1. Base Material

The above-mentioned base material may be formed of any appropriate material. For example, various sheet-shaped products, such as a resin film, paper, a cloth, a nonwoven fabric, metal foil, plastic laminates thereof, and a laminate of plastic products, may each be used as the base material. Of those, a resin film is most preferred from the viewpoints of handleability and cost. A material for forming the resin film may be selected as required from the viewpoints of strength, heat resistance, and the like. Examples thereof include: olefin-based resins each containing an α-olefin as a monomer component, such as polyethylene (PE), polypropylene (PP), an ethylene-propylene copolymer, and an ethylene-vinyl acetate copolymer (EVA); polyesters, such as polyethylene terephthalate (PET), polyethylene naphthalate (PEN), and polybutylene terephthalate (PBT); polyvinyl chloride (PVC); polyphenylene sulfide (PPS); amide-based resins, such as polyamide (nylon) and wholly aromatic polyamide (aramid); and polyetheretherketone (PEEK), polyimide, polyetherimide, polystyrene, and an acrylic resin. Those materials may be used alone or in combination thereof. In addition, any one of an unstretched film, a uniaxially stretched film, and a biaxially stretched film may be used as a plastic film. In addition, such film may be a laminate film formed of two or more film layers, or a film having a lubricant such as inert particles appropriately added may be used from the viewpoint of handleability.

The thickness of the above-mentioned base material is preferably 200 µm or less, more preferably from 1 µm to 200 µm, still more preferably from 5 µm to 100 µm, particularly preferably from 10 µm to 100 µm, particularly preferably from 20 µm to 100 µm, most preferably from 30 µm to 100 µm. When the thickness falls within such ranges, a gas adsorption sheet with a cover film that is prevented from lifting when formed into a roll shape and that has excellent workability can be obtained.

The moisture permeability of the above-mentioned base material is preferably 500 g/m²·24 hr or less, more preferably 100 g/m²·24 hr or less. The moisture permeability may be determined in conformity with JIS Z 0208, "Determination of the Water Vapour Transmission Rate (Dish Method)."

The above-mentioned base material may be subjected to surface treatment. Examples of the surface treatment include corona treatment, chromic acid treatment, ozone exposure, flame exposure, high-voltage discharge exposure, ionizing radiation treatment, and coating treatment with an undercoating agent.

### D-2. Pressure-sensitive Adhesive Layer

The thickness of the above-mentioned pressure-sensitive adhesive layer is preferably 30 µm or less, more preferably 20 µm or less, still more preferably 10 µm or less. The lower limit of the thickness of the pressure-sensitive adhesive layer is, for example, 1 µm (preferably 0.5 µm).

The above-mentioned pressure-sensitive adhesive layer includes any appropriate pressure-sensitive adhesive. Any appropriate pressure-sensitive adhesive may be used as the pressure-sensitive adhesive as long as the effect of the present invention is obtained. For example, a pressure-sensitive adhesive having pressure sensitivity may be used as the above-mentioned pressure-sensitive adhesive.

Examples of the pressure-sensitive adhesive having pressure sensitivity include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, and a styrene-diene block copolymer-based pressure-sensitive adhesive. Of those, an acrylic pressure-sensitive adhesive or a rubber-based pressure-sensitive adhesive is preferred, and an acrylic pressure-sensitive adhesive is more preferred. The above-mentioned pressure-sensitive adhesives may be used alone or in combination thereof. In one embodiment, a pressure-sensitive adhesive containing a base polymer having an aromatic ring and/or a double bond is used from the viewpoint of UV absorption. From such viewpoint as well, an acrylic pressure-sensitive adhesive may be preferably used.

An example of the above-mentioned acrylic pressure-sensitive adhesive is an acrylic pressure-sensitive adhesive containing, as a base polymer, an acrylic polymer (homopolymer or copolymer) using one or two or more kinds of (meth)acrylic acid alkyl esters as monomer components. Specific examples of the (meth)acrylic acid alkyl ester include (meth)acrylic acid C1-20 alkyl esters, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, a (meth)acrylic acid alkyl ester having a linear or branched alkyl group having 4 to 18 carbon atoms may be preferably used.

The above-mentioned acrylic polymer may contain a unit corresponding to any other monomer component copolymerizable with the above-mentioned (meth)acrylic acid alkyl ester as required for the purpose of modifying, for example, cohesive strength, heat resistance, and cross-linkability. Examples of such monomer component include: carboxyl group-containing monomers, such as acrylic acid, methacrylic acid, carboxyethyl acrylate, carboxypentyl acrylate, itaconic acid, maleic acid, fumaric acid, and crotonic acid; acid anhydride monomers, such as maleic anhydride and itaconic anhydride; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amide-based monomers, such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-based monomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxyethylene glycol (meth)acrylate, and methoxypolypropylene glycol (meth)acrylate; acrylic acid ester-based monomers each having a heterocycle, a halogen atom, or a silicon atom, such as tetrahydrofurfuryl (meth)acrylate, fluorinated (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof.

In one embodiment, the content of a constituent unit derived from an organic acid monomer (e.g., a (meth)acrylic acid group-containing monomer or a carboxyl group-containing monomer) in the base polymer (e.g., an acrylic polymer) is preferably 0.5 part by weight or less, more preferably 0.3 part by weight or less with respect to 100 parts by weight of the base polymer. When the content falls within such ranges, a cover film that hardly breaks the gas adsorption layer of the gas adsorption sheet when peeled off from the gas adsorption sheet can be obtained. In particular, when gas adsorbent particles each subjected to surface treatment (preferably, coupling treatment) are used, such effect becomes significant. In one embodiment, an acrylic polymer free of a constituent unit derived from an organic acid monomer is used.

In one embodiment, the content of a constituent unit derived from a nitrogen-containing monomer in the base polymer (e.g., an acrylic polymer) is preferably 20 parts by weight or less, more preferably 15 parts by weight or less with respect to 100 parts by weight of the base polymer. When the content falls within such ranges, a cover film that hardly breaks the gas adsorption layer of the gas adsorption sheet when peeled off from the gas adsorption sheet can be obtained.

The above-mentioned pressure-sensitive adhesive having pressure sensitivity may contain any appropriate additive as required. Examples of the additive include a cross-linking agent, a tackifier (e.g., a rosin-based tackifier, a terpene-based tackifier, or a hydrocarbon-based tackifier), a plasticizer (e.g., a trimellitic acid ester-based plasticizer or a pyromellitic acid ester-based plasticizer), a pigment, a dye, an age resistor, a conductive material, an antistatic agent, a light stabilizer, a release modifier, a softening agent, a surfactant, a flame retardant, an antioxidant, a UV absorber, and particles.

Examples of the above-mentioned cross-linking agent include an isocyanate-based cross-linking agent, an epoxy-based cross-linking agent, a melamine-based cross-linking agent, and a peroxide-based cross-linking agent, and also include a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred. In one embodiment, a cross-linking agent (e.g., an aromatic isocyanate-based cross-linking agent) having an aromatic ring and/or a double bond is used from the viewpoint of UV absorption.

Specific examples of the above-mentioned isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Tosoh Corporation, product name: "Coronate L"), a trimethylolpropane/hexamethylene diisocyanate trimer adduct (manufactured by Tosoh Corporation, product name: "Coronate HL"), and an isocyanurate form of hexamethylene diisocyanate (manufactured by Tosoh Corporation, product name: "Coronate HX"). The content of the isocyanate-based cross-linking agent may be set to any appropriate amount in accordance with the desired pressure-sensitive adhesive strength, and is typically from 0.1 part by weight to 20 parts by weight, more preferably from 0.5 part by weight to 10 parts by weight with respect to 100 parts by weight of the base polymer.

Examples of the above-mentioned epoxy-based cross-linking agent include N,N,N',N'-tetraglycidyl-m-xylenediamine, diglycidyl aniline, 1,3-bis(N,N-glycidylaminomethyl)cyclohexane (manufactured by Mitsubishi Gas Chemical Company, Inc., product name: "TETRAD-C"), 1,6-hexanediol diglycidyl ether (manufactured by Kyoeisha Chemical Co., Ltd., product name: "Epolight 1600"), neopentyl glycol diglycidyl ether (manufactured by Kyoeisha Chemical Co., Ltd., product name: "Epolight 1500NP"), ethylene glycol diglycidyl ether (manufactured by Kyoeisha Chemical Co., Ltd., product name: "Epolight 40E"), propylene glycol diglycidyl ether (manufactured by Kyoeisha Chemical Co., Ltd., product name: "Epolight 70P"), polyethylene glycol diglycidyl ether (manufactured by Nippon Oil & Fats Co., Ltd., product name: "EPIOL E-400"), polypropylene glycol diglycidyl ether (manufactured by Nippon Oil & Fats Co., Ltd., product name: "EPIOL P-200"), sorbitol polyglycidyl ether (manufactured by Nagase ChemteX Corporation, product name: "DENACOL EX-611"), glycerol polyglycidyl ether (manufactured by Nagase ChemteX Corporation, product name: "DENACOL EX-314"), pentaerythritol polyglycidyl ether, polyglycerol polyglycidyl ether (manufactured by Nagase ChemteX Corporation, product name: "DENACOL EX-512"), sorbitan polyglycidyl ether, trimethylolpropane polyglycidyl ether, adipic acid diglycidyl ester, o-phthalic acid diglycidyl ester, triglycidyl-tris(2-hydroxyethyl) isocyanurate, resorcin diglycidyl ether, bisphenol-S-diglycidyl ether, and an epoxy-based resin having two or more epoxy groups in a molecule thereof. The content of the epoxy-based cross-linking agent may be set to any appropriate amount in accordance with the desired pressure-sensitive adhesive strength, and is typically from 0.01 part by weight to 10 parts by weight, more preferably from 0.03 part by weight to 5 parts by weight with respect to 100 parts by weight of the base polymer.

Examples of the above-mentioned tackifier include a rosin-based resin (e.g., a rosin ester resin), a terpene-based resin (e.g., a terpene phenol copolymer (terpene-modified phenol resin), or a hydrogenated terpene resin), a coumarone indene-based resin, an alicyclic saturated hydrocarbon-based resin, a petroleum-based resin (e.g., a hydrocarbon-based petroleum resin, such as an aliphatic/aromatic copolymer-based petroleum resin or an aromatic-based petroleum resin), and a phenol-based resin. In one embodiment, a above-mentioned tackifier (e.g., a rosin-based resin) having an aromatic ring and/or a double bond is used from the viewpoint of UV absorption. The content of the tackifier may be set to any appropriate amount in accordance with the desired pressure-sensitive adhesive strength, and is typically from 1 part by weight to 50 parts by weight, more preferably from 10 parts by weight to 30 parts by weight with respect to 100 parts by weight of the base polymer.

### Examples

The present invention is specifically described below by way of Examples. However, the present invention is by no means limited to these Examples. Evaluation methods in Examples are as described below. In addition, in Examples, the terms "part(s)" and "%" are by weight unless otherwise stated.

### (1) Cover Film Peel Strength (Peel Force of Cover Film from Gas Adsorption Layer)

A gas adsorption sheet with a cover film was dried under a reduced pressure of -100 kPa at 130°C for 3 hours. After that, a cover film was peeled off from the gas adsorption layer of the gas adsorption sheet with a cover film, and its peel strength was measured.
Test speed: 300 mm/min
Peel angle: 180°
Measurement temperature: 25°C

### (2) Cover Film Peelability

A failure mode at the time of the cover film peel test was evaluated.
∘: The cover film was peelable at an interface between the cover film and the gas adsorption layer.
Δ: The surface layer of the gas adsorption layer was transferred to the cover film side.
×: The entire gas adsorption layer was transferred to the cover film side.

### (3) Gas Adsorption Layer Strength

The gas adsorption sheet with a cover film was dried under a reduced pressure of -100 kPa at 130°C for 3 hours. After that, the cover film was peeled off from the gas adsorption layer of the gas adsorption sheet (1) with a cover film, and an adhesive tape "No. 31B" manufactured by Nitto Denko Corporation was bonded to the exposed surface of the gas adsorption layer. The gas adsorption layer was evaluated for its strength by the peel strength of the adhesive tape.
Bonding conditions: bonding the adhesive tape by one back-and-forth pass with a 2 kg roller under an environment at 25°C
Test speed: 300 mm/min
Peel angle: 180°
Measurement temperature: 25°C

### (4) Heat Resistance

The state of the gas adsorption sheet after drying at 130°C under a reduced pressure of -100 kPa for 3 hours was observed.
∘: The form of the sheet was able to be maintained.
×: The form of the sheet was unable to be maintained.

### (5) Gas Adsorption Layer Adhesiveness

The failure mode of the gas adsorption layer at the time of the measurement of the strength of the gas adsorption layer in the above-mentioned evaluation (3) was evaluated.
∘: The cohesion failure mode of the gas adsorption layer was observed.
×: The anchoring failure of the gas adsorption layer was observed.

### (6) Workability

The gas adsorption sheet with a cover film was subjected to punching processing with a Thomson blade (size: 5 mm×20 mm, blade thickness: 0.7 mm, R: 0.2), and the state of the gas adsorption sheet after the punching was evaluated.
∘: No chipping of the gas adsorption layer was observed.
Δ: No chipping of the gas adsorption layer was observed, but the lifting and peeling of the cover film were observed.
×: The chipping of the gas adsorption layer was observed.

### (7) Moisture Resistance

The gas adsorption sheet with a cover film was dried under a reduced pressure of -100 kPa at 110°C for 3 hours, and was stored in a dry room at a dew point temperature of -50°C and a room temperature of 23°C. A change in moisture content of the gas adsorption sheet with a cover film by its moisture absorption was measured.
∘: A moisture content of 1% or less was able to be maintained for 8 hours or more in the dry room.
×: A moisture content of 1% or less was not able to be maintained for 8 hours in the dry room.
Moisture content measurement method (Karl Fischer method)
Moisture meter: manufactured by HIRANUMA Co., Ltd., AQ-2100

### (8) Cover Film Pressure-sensitive Adhesive Strength

The resultant cover film (1) was bonded to a SUS 304BA plate, and was evaluated for its peel strength when peeled off therefrom.
Bonding conditions: bonding the cover film by one back-and-forth pass with a 2 kg roller under an environment at 25°C
Test speed: 300 mm/min
Peel angle: 180°
Measurement temperature: 25°C

### (9) Handleability

Troubles occurring during the winding of the gas adsorption sheet with a cover film around a 3-inch winding core formed of an ABS resin were evaluated.
∘: There were no troubles.
×: The gas adsorption layer easily underwent detachment, its heat shrinkage occurred, or the gas adsorption layer was scratched during its conveyance.

### (10) Evaluation of Hydrogen Sulfide Gas Adsorption

The hydrogen sulfide gas adsorption property of the gas adsorption sheet with a cover film was evaluated with the following equipment by the following evaluation method.

### Equipment for Test

1: Tedlar bag (10 L for enclosing a test gas) *hereinafter referred to as "bag"
2: Detector tube (manufactured by Gastec Corporation, model: 4HM, 4M, and 4L)
3: Thermostatic bath (manufactured by Fukushima Galilei Co., Ltd., model: FMU-263I)
4: Metering pump for air enclosure (manufactured by Sibata Scientific Technology Ltd., model: MP-Σ300NII)
5: Electronic balance (manufactured by Shimadzu Corporation, model: ATX224)
6: Hydrogen sulfide cylinder (manufactured by Sumitomo Chemical Co., Ltd., purity: 99.9%)
7: Air cylinder (manufactured by Taiyo Nippon Sanso Corporation, Grade G2)

### Evaluation method: Stationary Method

1: A sample was dried at 130°C for 3 hours under atmospheric pressure.
2: The sample weighed with the electronic balance was put into the bag and sealed, and residual air in the bag was evacuated.
3: A predetermined amount of air was introduced into the bag with the metering pump.
4: A hydrogen sulfide gas was injected into the bag with a gas-tight syringe to prepare a test gas having a predetermined concentration (340 ppm).
5: The bag was left stationary in the thermostatic bath adjusted to a predetermined temperature and humidity (25°C, 0% RH).
6: After a predetermined time (24 hours) had elapsed, the bag was taken out, and the residual concentration in the bag was measured with the detector tube.

### [Production Example 1]

A four-necked flask with a stirring blade, a temperature gauge, a nitrogen gas inlet tube, and a condenser was loaded with 2-ethylhexyl acrylate/ethyl acrylate/methyl methacrylate/hydroxyethyl acrylate (30 parts by weight/70 parts by weight/5 parts by weight/4 parts by weight), 0.2 part by weight of benzoyl peroxide serving as a polymerization initiator, and 244 parts by weight of toluene. While the contents were gently stirred, a nitrogen gas was introduced, and a polymerization reaction was performed for about 6 hours with the liquid temperature in the flask being kept around 60°C to provide a resin composition (1) containing an acrylic copolymer (1).

### [Production Example 2]

A four-necked flask with a stirring blade, a temperature gauge, a nitrogen gas inlet tube, and a condenser was loaded with 2-ethylhexyl acrylate/hydroxyethyl acrylate (100 parts by weight/4 parts by weight), 0.2 part by weight of a polymerization initiator (benzoyl peroxide), and 120 parts by weight of ethyl acetate. While the contents were gently stirred, a nitrogen gas was introduced, and a polymerization reaction was performed for about 6 hours with the liquid temperature in the flask being kept around 60°C to provide a resin composition (2) containing an acrylic copolymer (2).

### [Production Example 3]

A four-necked flask with a stirring blade, a temperature gauge, a nitrogen gas inlet tube, and a condenser was loaded with butyl acrylate/4-hydroxybutyl acrylate (99 parts by weight/1 part by weight), 0.2 part by weight of a polymerization initiator (benzoyl peroxide), and 120 parts by weight of ethyl acetate. While the contents were gently stirred, a nitrogen gas was introduced, and a polymerization reaction was performed for about 6 hours with the liquid temperature in the flask being kept around 60°C to provide a resin composition (3) containing an acrylic copolymer (3).

### [Production Example 4]

A four-necked flask with a stirring blade, a temperature gauge, a nitrogen gas inlet tube, and a condenser was loaded with butyl acrylate/4-hydroxybutyl acrylate/acrylic acid (97 parts by weight/3 parts by weight/0.2 part by weight), 0.2 part by weight of a polymerization initiator (benzoyl peroxide), and 120 parts by weight of ethyl acetate. While the contents were gently stirred, a nitrogen gas was introduced, and a polymerization reaction was performed for about 6 hours with the liquid temperature in the flask being kept around 60°C to provide a resin composition (4) containing an acrylic copolymer (4).

### [Production Example 5]

A four-necked flask with a stirring blade, a temperature gauge, a nitrogen gas inlet tube, and a condenser was loaded with 2-ethylhexyl acrylate/acrylic acid (95 parts by weight/5 parts by weight), 0.2 part by weight of a polymerization initiator (benzoyl peroxide), and 120 parts by weight of ethyl acetate. While the contents were gently stirred, a nitrogen gas was introduced, and a polymerization reaction was performed for about 6 hours with the liquid temperature in the flask being kept around 60°C to provide a resin composition (5) containing an acrylic copolymer (5).

### [Production Example 6] Production of Heat-resistant Base Material with Intermediate Layer

3 Parts by weight of an isocyanate-based cross-linking agent (manufactured by Mitsui Chemicals, Inc., product name: "TAKENATE D-101E") and ethyl acetate were added to the resin composition (5) containing 100 parts by weight of the acrylic copolymer (5) to prepare an 18%-base composition (1) for intermediate layer formation.

The resultant composition (1) for intermediate layer formation was applied onto a heat-resistant base material (polyimide film, manufactured by Du Pont-Toray Co., Ltd., product name: "Kapton 100H", thickness: 25 µm) so as to have a thickness of 10 µm after drying. Thus, a heat-resistant base material (1) with an intermediate layer was obtained.

### [Production Example 7] Method for Surface Treatment of Gas Adsorbent Particles

A four-necked flask with a stirring blade, a temperature gauge, a nitrogen gas inlet tube, and a condenser was loaded with 100 parts by weight of Kesmon NS-20C (manufactured by Toagosei Co., Ltd.) serving as gas adsorbent particles, 4 parts by weight of KBM-4803 (manufactured by Shin-Etsu Chemical Co., Ltd.) serving as a silane coupling agent, 150 parts by weight of tetrahydrofuran, and 1.3 parts by weight of distilled water. While the contents were gently stirred, a nitrogen gas was introduced, and a coupling reaction was performed for about 6 hours with the liquid temperature in the flask being kept around 60°C to provide surface-treated particles (1).

### [Production Example 8] Production of Cover Film (1)

3 Parts by weight of an isocyanate-based cross-linking agent (manufactured by Mitsui Chemicals, Inc., product name: "TAKENATE D-101E") and ethyl acetate were added to the resin composition (3) containing 100 parts by weight of the acrylic copolymer (3) to prepare a 15%-base composition (1) for pressure-sensitive adhesive layer formation. The composition (1) for pressure-sensitive adhesive layer formation was applied onto a polyester film having a thickness of 75 µm (manufactured by Toray Industries, Inc., product name: "Lumirror S10") so as to have a thickness of 10 µm after drying. Thus, a cover film (1) was obtained.

### [Production Example 9] Production of Cover Film (2)

A cover film (2) was obtained in the same manner as in Production Example 8 except that the application thickness of the composition (1) for pressure-sensitive adhesive layer formation was changed to 20 µm.

### [Production Example 10] Production of Cover Film (3)

3 Parts by weight of an isocyanate-based cross-linking agent (manufactured by Mitsui Chemicals, Inc., product name: "TAKENATE D-101E") and ethyl acetate were added to the resin composition (4) containing 100 parts by weight of the acrylic copolymer (4) to prepare a 15%-base composition (2) for pressure-sensitive adhesive layer formation. The composition (2) for pressure-sensitive adhesive layer formation was applied onto a polyester film having a thickness of 75 µm (manufactured by Toray Industries, Inc., product name: "Lumirror S10") so as to have a thickness of 10 µm after drying. Thus, a cover film (3) was obtained.

### [Production Example 11] Production of Cover Film (4)

A cover film (4) was obtained in the same manner as in Production Example 8 except that the thickness of the polyester film was changed to 50 µm.

### [Production Example 12] Production of Cover Film (5)

A cover film (5) was obtained in the same manner as in Production Example 8 except that the thickness of the polyester film was changed to 25 µm.

### [Production Example 13] Production of Cover Film (6)

3 Parts by weight of an isocyanate-based cross-linking agent (manufactured by Mitsui Chemicals, Inc., product name: "TAKENATE D-101E") and ethyl acetate were added to the resin composition (1) containing 100 parts by weight of the acrylic copolymer (1) to prepare a 15%-base composition (3) for pressure-sensitive adhesive layer formation. The composition (3) for pressure-sensitive adhesive layer formation was applied onto a polyester film having a thickness of 50 µm (manufactured by Toray Industries, Inc., product name: "Lumirror S10") so as to have a thickness of 5 µm after drying. Thus, a cover film (6) was obtained.

### [Example 1]

3 Parts by weight of an isocyanate-based cross-linking agent (manufactured by Mitsui Chemicals, Inc., product name: "TAKENATE D-101E"), ethyl acetate, and 900 parts by weight of hydrogen sulfide gas adsorbent particles (copper ion-supported silicate, manufactured by Toagosei Co., Ltd., product name: "Kesmon NS-20C", average primary particle diameter D50: 10 µm or less) were added to the resin composition (1) containing 100 parts by weight of the acrylic copolymer (1) to prepare a 50%-base composition (1) for gas adsorption layer formation.

The resultant composition (1) for gas adsorption layer formation was applied onto a release-treated film (manufactured by FUJIKO Co., Ltd., product name: "CA0", thickness: 75 µm) so as to have a thickness of 60 µm after drying. Thus, a gas adsorption layer (1) was obtained.

The resultant gas adsorption layer (1) was transferred to the intermediate layer of the heat-resistant base material (1) with an intermediate layer. Thus, a gas adsorption sheet (1) was obtained.

The cover film (1) was bonded to the gas adsorption layer of the gas adsorption sheet (1) to provide a gas adsorption sheet (1) with a cover film. The resultant gas adsorption sheet (1) with a cover film was subjected to the above-mentioned evaluations. The results are shown in Table 1.

### [Examples 2 to 6]

Gas adsorption sheets with cover films were obtained in the same manner as in Example 1 except that the resin composition for forming the gas adsorption layer, the blending amount of the hydrogen sulfide gas adsorbent particles, the thickness of the gas adsorption layer, and the kind of the cover film were changed as shown in Table 1. The resultant gas adsorption sheets with cover films were subjected to the above-mentioned evaluations. The results are shown in Table 1.

### [Comparative Example 1]

3 Parts by weight of an isocyanate-based cross-linking agent (manufactured by Mitsui Chemicals, Inc., product name: "TAKENATE D-101E"), ethyl acetate, and 900 parts by weight of hydrogen sulfide gas adsorbent particles (copper ion-supported silicate, manufactured by Toagosei Co., Ltd., product name: "Kesmon NS-20C", average primary particle diameter D50: 10 µm or less) were added to the resin composition (3) containing 100 parts by weight of the acrylic copolymer (3) to prepare a 50%-base composition for gas adsorption layer formation.

The composition for gas adsorption layer formation was applied onto a heat-resistant base material (polyimide film, manufactured by Du Pont-Toray Co., Ltd., product name: "Kapton 100H", thickness: 25 µm) so as to have a thickness of 10 µm after drying. Thus, a gas adsorption sheet was obtained. The resultant gas adsorption sheet was subjected to the above-mentioned evaluations. The results are shown in Table 2.

### [Comparative Example 2]

3 Parts by weight of an isocyanate-based cross-linking agent (manufactured by Mitsui Chemicals, Inc., product name: "TAKENATE D-101E"), ethyl acetate, and 10 parts by weight of hydrogen sulfide gas adsorbent particles (copper ion-supported silicate, manufactured by Toagosei Co., Ltd., product name: "Kesmon NS-20C", average primary particle diameter D50: 10 µm or less) were added to the resin composition (3) containing 100 parts by weight of the acrylic copolymer (3) to prepare a 50%-base composition for gas adsorption layer formation.

The resultant composition for gas adsorption layer formation was applied onto a release-treated film (manufactured by FUJIKO Co., Ltd., product name: "CA0", thickness: 75 µm) so as to have a thickness of 80 µm after drying. Thus, a gas adsorption layer was obtained.

The resultant gas adsorption layer was transferred to the intermediate layer of the heat-resistant base material (1) with an intermediate layer. Thus, a gas adsorption sheet was obtained.

### [Comparative Example 3]

3 Parts by weight of an isocyanate-based cross-linking agent (manufactured by Mitsui Chemicals, Inc., product name: "TAKENATE D-101E"), ethyl acetate, and 250 parts by weight of hydrogen sulfide gas adsorbent particles (copper ion-supported silicate, manufactured by Toagosei Co., Ltd., product name: "Kesmon NS-20C", average primary particle diameter D50: 10 µm or less) were added to the resin composition (3) containing 100 parts by weight of the acrylic copolymer (3) to prepare a 50%-base composition for gas adsorption layer formation.

The resultant composition for gas adsorption layer formation was applied onto a release-treated film (manufactured by FUJIKO Co., Ltd., product name: "CA0", thickness: 75 µm) so as to have a thickness of 80 µm after drying. Thus, a gas adsorption layer was obtained.

The resultant gas adsorption layer was transferred to the intermediate layer of the heat-resistant base material (1) with an intermediate layer. Thus, a gas adsorption sheet was obtained.

### [Comparative Example 4]

A gas adsorption sheet was obtained in the same manner as in Comparative Example 2 except that 900 parts by weight of Molecular Sieve 5A (manufactured by Union Showa K.K.) was used instead of 10 parts by weight of the hydrogen sulfide gas adsorbent particles (copper ion-supported silicate, manufactured by Toagosei Co., Ltd., product name: "Kesmon NS-20C", average primary particle diameter D50: 10 µm or less).

**Table 1**

| | | | Example 1 | Example 2 | Example 3 |
|---|---|---|---|---|---|
| Gas adsor ption sheet | Gas adsorption layer | Polymer | Resin composition (1) | Resin composition (2) | Resin composition (3) |
| | | | 2EHA/EA/MMA/HEA= 30/70/5/4 | 2EHA/HEA=100/4 | BA/4HBA=99/1 |
| | | Cross-linking agent | D101E | D101E | D101E |
| | | Cross-linking agent (blending amount) | 3 | 3 | 3 |
| | | Particles | Kesmon NS-20C | Kesmon NS-20C | Kesmon NS-20C |
| | | Particle blending amount (part(s) by weight) | 900 | 900 | 900 |
| | | Thickness | 60 µm | 80 µm | 80 µm |
| | Intermedia te layer | Polymer | Resin composition (5) | Resin composition (5) | Resin composition (5) |
| | | | 2EHA/AA=95/5 | 2EHA/AA=95/5 | 2EHA/AA=95/5 |
| | | Cross-linking agent | D101E | D101E | D101E |
| | | Cross-linking agent (blending amount) | 3 | 3 | 3 |
| | | Thickness | 10 µm | 10 µm | 10 µm |
| | Base material | | Kapton 100H | Kapton 100H | Kapton 100H |
| Cover film | Cover film | | Cover film (1) | Cover film (2) | Cover film (3) |
| | Base material | | Lumirror S10 #75 | Lumirror S10 #75 | Lumirror S10 #75 |
| | Pressure-sensitive adhesive layer | Polymer | Resin composition (3) | Resin composition (3) | Resin composition (4) |
| | | | BA/4HBA=99/1 | BA/4HBA=99/1 | BA/4HBA/AA=97/3/ 0.2 |
| | | Cross-linking agent | D101E | D101E | D101E |
| | | Cross-linking agent (blending amount) | 3 | 3 | 3 |
| | | Thickness | 10 µm | 20 µm | 10 µm |
| | Pressure-sensitive adhesive strength [N/20 mm] | | 0.45 | 0.15 | 0.15 |
| Evalu ation | Handleability | | ○ | ○ | ○ |
| | Gas adsorption layer strength [N/19 mm] | | 2.53 | 2.11 | 2.34 |
| | Adhesiveness of gas adsorption layer | | ○ | ○ | ○ |
| | Heat resistance (gas adsorption sheet) | | ○ | ○ | ○ |
| | Workability | | ○ | ○ | ○ |
| | Peel force from gas adsorption layer [N/50 mm] | | 0.05 | 0.07 | 0.04 |
| | Cover film peelability after drying | | ○ | ○ | ○ |
| | Moisture resistance | | ○ | ○ | ○ |
| | Hydrogen sulfide gas adsorption capacity | | ○ (300 mg/g) | ○ (285 mg/g) | ○ (305 mg/g) |

| | | | Example 4 | Example 5 | Example 6 |
|---|---|---|---|---|---|
| Gas adsorption sheet | Gas adsorption layer | Polymer | Resin composition (1) | Resin composition (2) | Resin composition (3) |
| | | | 2EHA/EA/MMA/HEA= 30/70/5/4 | 2EHA/HEA=100/4 | BA/4HBA=99/1 |
| | | Cross-linking agent | D101E | D101E | D101E |
| | | Cross-linking agent (blending amount) | 3 | 3 | 3 |
| | | Particles | Kesmon NS-20C | Kesmon NS-20C | Kesmon NS-20C |
| | | Particle blending amount (part(s) by weight) | 250 | 250 | 250 |
| | | Thickness | 60 µm | 40 µm | 80 µm |
| | Intermediate layer | Polymer | Resin composition (5) | Resin composition (5) | Resin composition (5) |
| | | | 2EHA/AA=95/5 | 2EHA/AA=95/5 | 2EHA/AA=95/5 |
| | | Cross-linking agent | D101E | D101E | D101E |
| | | Cross-linking agent (blending amount) | 3 | 3 | 3 |
| | | Thickness | 10 µm | 10 µm | 10 µm |
| | Base material | | Kapton 100H | Kapton 100H | Kapton 100H |
| Cover film | Cover film | | Cover film (4) | Cover film (5) | Cover film (6) |
| | Base material | | Lumirror S10 #50 | Lumirror S10 #25 | Lumirror S10 #50 |
| | Pressure-sensitive adhesive layer | Polymer | Resin composition (3) | Resin composition (3) | Resin composition (1) |
| | | | BA/4HBA=99/1 | BA/4HBA=99/1 | 2EHA/EA/MMA/HEA= 30/70/5/4 |
| | | Cross-linking agent | D101E | D101E | D101E |
| | | Cross-linking agent (blending amount) | 3 | 3 | 3 |
| | | Thickness | 10 µm | 10 µm | 5 µm |
| | Pressure-sensitive adhesive strength [N/20 mm] | | 0.15 | 0.15 | 0.25 |
| Evaluation | Handleability | | ○ | ○ | ○ |
| | Gas adsorption layer strength [N/19 mm] | | 11.5 | 12.3 | 10.4 |
| | Adhesiveness of gas adsorption layer | | ○ | ○ | ○ |
| | Heat resistance (gas adsorption sheet) | | ○ | ○ | ○ |
| | Workability | | ○ | ○ | ○ |
| | Peel force from gas adsorption layer [N/50 mm] | | 0.05 | 0.04 | 0.05 |
| | Cover film peelability after drying | | ○ | ○ | ○ |
| | Moisture resistance | | ○ | ○ | ○ |
| | Hydrogen sulfide gas adsorption capacity | | ○ (80 mg/g) | ○ (70.4 mg/g) | ○ (67.2 mg/g) |

**Table 2**

| | | | Comparative Example 1 | Comparative Example 2 | Comparative Example 3 | Comparative Example 4 |
|---|---|---|---|---|---|---|
| Gas adsorption sheet | Gas adsorption layer | Polymer | Resin composition (3) | Resin composition (3) | Resin composition (3) | Resin composition (3) |
| | | | BA/4HBA=99/1 | BA/4HBA=99/1 | BA/4HBA=99/1 | BA/4HBA=99/1 |
| | | Cross-linking agent | D101E | D101E | D101E | D101E |
| | | Cross-linking agent (blending amount) | 3 | 3 | 3 | 3 |
| | | Particles | Kesmon NS-20C | Kesmon NS-20C | Kesmon NS-20C | Molecular Sieve 5A |
| | | Particle blending amount (part(s) by weight) | 900 | 10 | 250 | 900 |
| | | Thickness | 80 µm | 80 µm | 80 µm | 80 µm |
| | Interm ediate layer | Polymer | | Resin composition (5) | Resin composition (5) | Resin composition (5) |
| | | | - | 2EHA/AA=95/5 | 2EHA/AA=95/5 | 2EHA/AA=95/5 |
| | | Cross-linking agent | - | D101E | D101E | D101E |
| | | Cross-linking agent (blending amount) | | 3 | 3 | 3 |
| | | Thickness | - | 10 µm | 10 µm | 10 µm |
| | Base material | | Kapton 100H | Kapton 100H | Torayfan 2578 #40 | Kapton 100H |
| Cover film | Cover film | | | | | |
| | Base material | | - | - | - | - |
| | Pressu re-sensit ive adhesi ve layer | Polymer | | | | |
| | | | | | | |
| | | Cross-linking agent | - | - | - | - |
| | | Cross-linking agent (blending amount) | | | | |
| | | Thickness | - | - | - | - |
| | Pressure-sensitive adhesive strength [N/20 mm] | | | | | |
| Evalua tion | Handleability | | × Peeled when wound into roll shape | × Scratch on gas adsorption layer | × Large heat shrinkage during drying | × Scratch on gas adsorption layer |
| | Gas adsorption layer strength [N/19 mm] | | 0.05 | 15.3 | 10.3 | 0.12 |
| | Adhesiveness of gas adsorption layer | | × | ○ | ○ | ○ |
| | Heat resistance (gas adsorption sheet) | | - | - | × | - |
| | Workability | | × (Detachment of gas adsorption layer) | × (Contamination of punching blade) | × Unmeasurable because form was unable to be maintained | × (Detachment of gas adsorption layer) |
| | Peel force from gas adsorption layer [N/50 mm] | | - | - | - | - |
| | Cover film peelability after drying | | - | - | - | - |
| | Moisture resistance | | × | × | × | × |
| | Hydrogen sulfide gas adsorption capacity | | × Unmeasurable due to detachment of gas adsorption layer | × Insufficient adsorption amount (1.1 mg/g) | × Unmeasurable because form was unable to be maintained | × Insufficient adsorption amount (0.2 mg/g) |

### Industrial Applicability

The gas adsorption sheet of the present invention may be suitably used as a gas adsorption material for a nonaqueous secondary battery.

### Reference Signs List

- **10**: heat-resistant base material
- **20**: gas adsorption layer
- **30**: intermediate layer
- **110**: gas adsorption sheet
- **120**: cover film
- **100**: gas adsorption sheet with cover film

## Claims

1. A gas adsorption sheet for a secondary battery with a cover film, comprising:
a gas adsorption sheet for a secondary battery including a heat-resistant base material, and a gas adsorption layer arranged on at least one side of the heat-resistant base material; and
a cover film arranged on the gas adsorption layer on a side opposite to the heat-resistant base material,
wherein the gas adsorption layer contains:
a binder resin; and
gas adsorbent particles each of which is formed of an inorganic porous material having pores, and is capable of adsorbing a gas.

2. The gas adsorption sheet for a secondary battery with a cover film according to claim 1, further comprising an intermediate layer arranged between the heat-resistant base material and the gas adsorption layer.

3. The gas adsorption sheet for a secondary battery with a cover film according to claim 1,
wherein the gas adsorbent particles are each a composite of a salt of at least one kind of metal selected from copper, zinc, manganese, cobalt, and nickel, and a silicate, and
wherein the gas adsorbent particles have a pore volume of from 0.3 ml/g to 0.5 ml/g.

4. The gas adsorption sheet for a secondary battery with a cover film according to claim 1, wherein the gas adsorbent particles each have a surface-treated surface treated with silicone.

5. The gas adsorption sheet for a secondary battery with a cover film according to claim 4, wherein the silicone has an ethoxysilane group or a methoxysilane group.

6. The gas adsorption sheet for a secondary battery with a cover film according to claim 4, wherein the silicone serves as a silane coupling agent having an epoxy group or an amino group.

7. The gas adsorption sheet for a secondary battery with a cover film according to claim 4, wherein the silicone is an alkoxysilane or an organosilazane compound.

8. The gas adsorption sheet for a secondary battery with a cover film according to claim 1, wherein the binder resin is an acrylic resin.

9. The gas adsorption sheet for a secondary battery with a cover film according to claim 8,
wherein the binder resin contains a constituent unit derived from a (meth)acrylic acid alkyl ester, and
wherein the (meth)acrylic acid alkyl ester has a linear or branched alkyl group having 4 to 12 carbon atoms.

10. The gas adsorption sheet for a secondary battery with a cover film according to claim 1, wherein the binder resin is a butyl rubber, an isoprene rubber, a polyisobutylene rubber, an ethylene propylene rubber, or a silicone-based resin.

11. The gas adsorption sheet for a secondary battery with a cover film according to claim 1, wherein a content of the gas adsorbent particles is from 10 parts by weight to 90 parts by weight with respect to 100 parts by weight of the gas adsorption sheet for a secondary battery.

12. The gas adsorption sheet for a secondary battery with a cover film according to claim 1, wherein a material for forming the heat-resistant base material is polyamide imide, polyetherimide, polyphenylene sulfide, polyethylene naphthalate, polyimide, or polyetheretherketone.

13. The gas adsorption sheet for a secondary battery with a cover film according to claim 1, wherein the cover film includes a base material and a pressure-sensitive adhesive layer arranged on at least one side of the base material.

14. The gas adsorption sheet for a secondary battery with a cover film according to claim 13,
wherein the pressure-sensitive adhesive layer is formed of a pressure-sensitive adhesive containing a base polymer, and
wherein a content of a constituent unit derived from an organic acid monomer in the base polymer is 0.5 part by weight or less with respect to 100 parts by weight of the base polymer.

15. The gas adsorption sheet for a secondary battery with a cover film according to claim 13, wherein the cover film is peelable.

16. An all-solid-state secondary battery, comprising the gas adsorption sheet of claim 1 inside a battery case.

17. An all-solid-state secondary battery using a sulfide-based solid electrolyte, the battery comprising the gas adsorption sheet of claim 1 inside a battery case.
